# FASCICULE DE BREVET EUROPEEN

(11) **EP 1 827 881 B1**
(45) Date de publication et mention de la délivrance du brevet: **23.07.2008**
(21) Numéro de dépôt: 05824263.7
(22) Date de dépôt: 07.12.2005
(51) Int. Cl.: B60J 1/06

(54) **PARE BRISE PANORAMIQUE POUR VEHICULE AUTOMOBILE**
PANORAMAWINDSCHUTZSCHREIBE FÜR EIN KRAFTFAHRZEUG
PANORAMIC WINDSCREEN FOR A MOTOR VEHICLE

(30) Priorité: 17.12.2004 FR 0453039
(43) Date de publication de la demande: 05.09.2007
(73) Titulaire: RENAULT S.A.S., 92100 Boulogne Billancourt (FR)
(72) Inventeur: MOREAU, Michel, F-78200 Jouy Mauvoisin (FR); FLAN, Richard, F-78100 St Germain En Laye (FR); GROS, Christian, F-78400 Chatou (FR)
(74) Mandataire: Guyon, Rodolphe C.
(86) Numéro de dépôt international: PCT/FR2005/051054
(87) Numéro de publication internationale: WO 2006/077296

(56) Documents cités:
- US-A- 2 761 729
- US-A- 5 060 440
- US-A- 5 601 050
- US-A- 5 941 596
- US-A1- 2004 160 082

## Description

### DOMAINE TECHNIQUE

La présente invention se rapporte de façon générale à un pare-brise panoramique pour véhicule automobile.

En outre, l'invention concerne également un véhicule automobile comprenant ce pare-brise panoramique.

### ÉTAT DE LA TECHNIQUE ANTÉRIEURE

Actuellement, les pare-brise de véhicule automobile sont généralement réalisés d'une unique vitre légèrement bombée en verre feuilleté. La tendance actuelle est d'augmenter la clarté dans l'habitacle pour que le conducteur et le passager aient une visibilité maximum. Cela se concrétise avec les pavillons qui sont transparents au moins en partie. Cette clarté pourrait être accrue en augmentant la superficie du pare-brise.

Le problème est que la taille de ces pare-brise est limitée par des contraintes physiques, dues à l'utilisation du verre feuilleté pour leur fabrication.

### EXPOSÉ DE L'INVENTION

La présente invention a pour but de proposer un pare-brise panoramique bien plus grand que ceux existants actuellement.

Pour atteindre ce but, la présente invention propose un pare-brise panoramique comportant au moins un côté incurvé destiné à empiéter sur un pavillon d'un véhicule automobile et comportant une vitre morcelée en au moins deux parties affleurantes devant être assemblées l'une à l'autre de manière quasi jointive par l'intermédiaire d'un cadre dans lequel est enchâssé l'une des deux parties et supportant au moins l'autre des deux parties.

Ainsi, cette conception permet d'agrandir la surface du pare-brise en remontant sur le pavillon du véhicule automobile sans être limitée par les contraintes physiques du verre feuilleté.

Avec cette conception, il est également possible d'obtenir un pare-brise panoramique ayant deux côtés incurvés formant des retours latéraux et un autre côté incurvé empiétant sur le pavillon du véhicule.

En outre, l'invention a pour objet un véhicule automobile comprenant un pare-brise panoramique ainsi défini.

### BRÈVE DESCRIPTION DES DESSINS

La présente invention sera mieux comprise à la lecture de la description d'exemples de réalisation donnés, à titre purement indicatif et nullement limitatif en faisant référence aux dessins annexés sur lesquels :
- la figure 1 représente une vue partielle en perspective d'un véhicule automobile ainsi que d'un pare-brise panoramique selon un mode de réalisation particulier de la présente invention ;
- les figures 2A à 2C représentent des vues partielles d'une coupe longitudinale d'un pare-brise panoramique similaire à celui de la figure 1, selon trois modes de réalisation particuliers de la présente invention;
- la figure 3 représente une vue partielle d'une coupe longitudinale d'un véhicule automobile comprenant un pare-brise panoramique similaire à celui de la figure 1;
- les figures 4A et 4B représentent des vues partielles d'une coupe longitudinale d'un pare-brise panoramique selon deux modes de réalisation particuliers de la présente invention ;

### EXPOSÉ DÉTAILLÉ DE MODES DE RÉALISATION PARTICULIERS

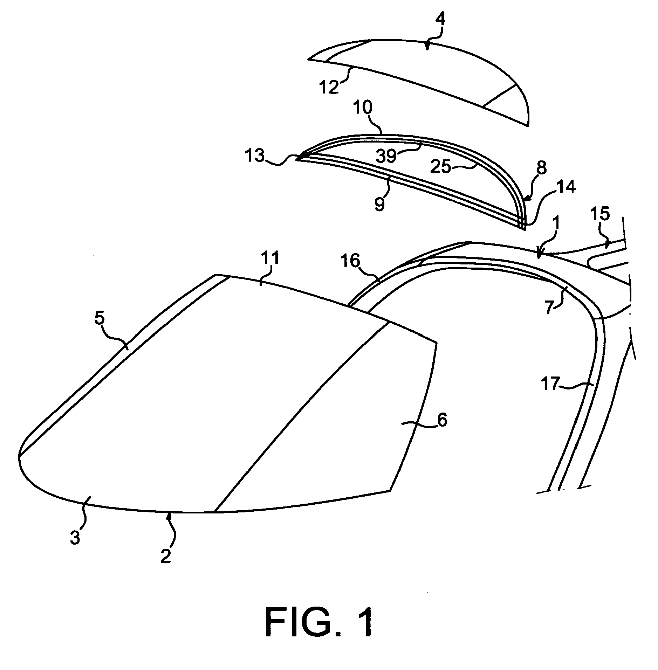

En référence à la figure 1, il est partiellement représenté un véhicule automobile 1 objet de la présente invention. Un pare-brise panoramique 2, également objet de la présente invention, est également représenté sur cette figure 1.

Comme on peut l'apercevoir sur cette figure 1, le pare-brise panoramique 2 comporte une vitre morcelée en au moins deux parties 3,4 affleurantes destinées à être assemblées l'une à l'autre de manière quasi jointive. Dans cet exemple, il y a deux parties : une première partie 3 représentée comme une partie inférieure et une seconde partie 4 représentée comme une partie supérieure.

Dans l'exemple illustré sur la figure 1, le pare-brise 2 comporte deux côtés incurvés 5,6 formant des retours latéraux, ou « joues ». Ces retours vont empiéter sur les flancs du véhicule lorsque le pare-brise sera en place. C'est la première partie 3 de la vitre du pare-brise 2 qui est munie de ces retours latéraux dont les dimensions sont adaptées au type de véhicule. Le pare-brise 2 peut donc être plus ou moins incurvé sur ses flancs latéraux suivant les dimensions de ces retours.

Le pare-brise 2 comporte également un autre côté incurvé destiné à empiéter sur un pavillon 7 du véhicule 1. C'est la seconde partie 4 de la vitre du pare-brise 2 qui va donner cette courbure supplémentaire au pare-brise 2. Cette seconde partie 4 peut être, par exemple, en forme d'une portion de calotte.

La vitre est transparente au moins en partie. La première partie 3 peut être réalisée en verre feuilleté, et la seconde partie 4 peut être réalisée en verre feuilleté comme dans les exemples des figures 1 à 4, ou en verre trempé ou matériau synthétique tel que du polycarbonate.

Le pare-brise 2 comporte également un cadre 8 qui permet d'enchâsser la seconde partie 4 et de supporter au moins la première partie 3. Les deux parties 3,4 doivent ensuite être solidarisées à l'aide de ce cadre 8. Un premier mode de réalisation particulier est représenté sur la figure 1. Le cadre 8 comporte un élément transversal 9 et un arceau 10 solidarisé à deux extrémités 13,14 de l'élément transversal 9. L'élément transversal 9 permet de réaliser la jointure entre les deux parties 3,4 le long d'un de leurs bords. Ce bord est référencé respectivement 11,12. La partie non enchâssée 3 est également fixée sur cet élément transversal 9.

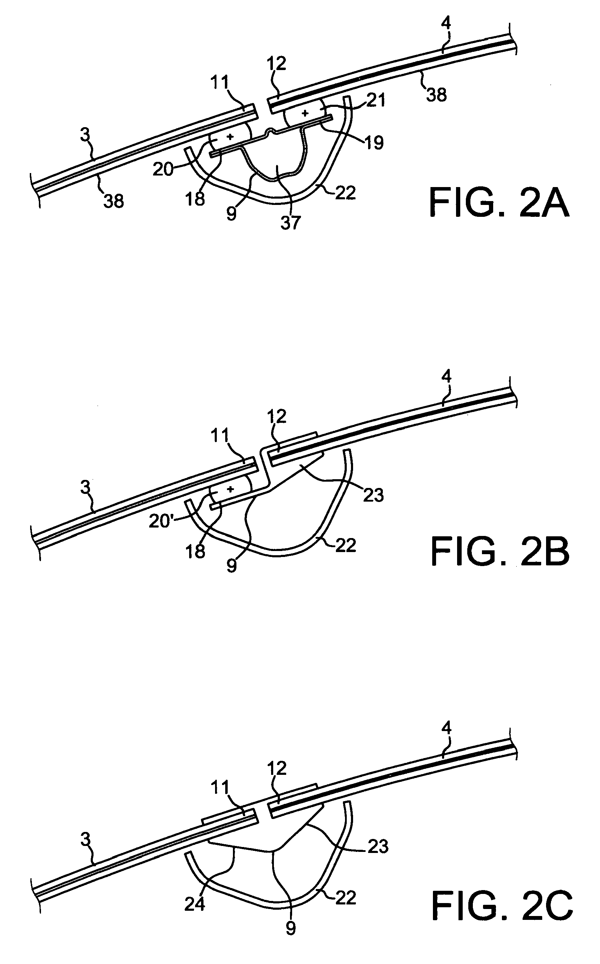

Différents types d'élément transversal 9 peuvent être envisagés. Plusieurs exemples d'élément transversal 9 sont représentés sur les figures 2A à 2C.

Sur la figure 2A, l'élément transversal 9 comporte sur deux bords opposés, deux feuillures 18,19, sur lesquelles viennent se fixer respectivement chacune des deux parties 3,4. La fixation peut être réalisée par de la colle ou un élément adhésif approprié. Sur la figure 2A, deux cordons de colle 20,21 fixent les bords 11,12 des parties 3,4 à l'élément transversal 9. Pour des raisons d'esthétisme, un garnissage 22 généralement opaque peut venir masquer l'élément transversal 9 sur toute sa longueur. Il se trouvera alors dans l'habitacle du véhicule 1, recouvrant ainsi une zone principale 37 de l'élément transversal 9 se trouvant sur une face concave 38 des deux parties 3,4. Ce type d'élément transversal 9 ayant une largeur le long du pare-brise d'environ 58 mm, apparaît dans le champ de vision du conducteur avec un angle d'environ 5°, ce qui donne une largeur vue du conducteur d'environ 78 mm.

Un deuxième exemple d'élément transversal 9 est représenté sur la figure 2B. L'élément transversal 9 comporte un bord avec une feuillure 18 ou décrochement, sur laquelle vient se fixer le bord 11 de la première partie 3. La fixation est réalisée par un collage classique ou un élément adhésif approprié. On suppose que la fixation se fait par au moins un élément adhésif 20'. L'élément transversal 9 comporte un autre bord opposé au premier bord avec une rainure 23 dans laquelle la seconde partie 4 vient s'emboîter. L'emboîtage est réalisé le long du bord 12 de la seconde partie 4. Là encore, l'élément transversal 9 peut être recouvert d'un garnissage opaque 22 sur toute sa longueur, comme indiqué précédemment. Ce type d'élément transversal 9 ayant une largeur le long du pare-brise d'environ 42 mm, apparaît dans le champ de vision du conducteur avec un angle d'environ 4°, ce qui donne une largeur vue du conducteur d'environ 61 mm. De plus, ce deuxième exemple d'élément transversal 9 permet de réduire le nombre de cordons de colle ou d'éléments adhésifs à utiliser pour fixer les parties 3,4. C'est un avantage car un cordon de colle ou un élément adhésif peut se détériorer avec le temps.

Un troisième exemple d'élément transversal 9 est représenté sur la figure 2C. L'élément transversal 9 comporte sur deux bords opposés deux rainures 23,24 opposées par leur fond, dans lesquelles les parties 3,4 viennent s'emboîter. L'emboîtage des deux parties 3,4 se fait le long de leur bord 11,12. Là encore, l'élément transversal 9 peut être recouvert d'un garnissage opaque 22 sur toute sa longueur, comme indiqué précédemment. Dans ce troisième exemple d'élément transversal 9, l'utilisation de cordons de colle ou d'éléments adhésifs n'est plus nécessaire.

Comme l'élément transversal 9, l'arceau 10 peut être réalisé de différentes façons. L'arceau 10 peut comporter une feuillure 25, similaire à la feuillure 18 de l'élément transversal 9, sur un bord intérieur 39, visible sur la figure 1. On fixe à cette feuillure 25 la seconde partie 4 par de la colle ou un élément adhésif approprié. Une autre solution est que l'arceau 10 comporte sur son bord intérieur 39 une rainure 26, similaire à la rainure 23 de l'élément transversal 9. La seconde partie 4 vient s'emboîter dans la rainure 26 de l'arceau 10 et, par exemple, dans la rainure 23 de l'élément transversal 9.

Les trois exemples d'élément transversal 9 cités précédemment peuvent donc être utilisés avec un arceau 10 présentant sur son bord intérieur 39 une feuillure 25 ou une rainure 26. On pourrait également envisager que ce soit la première partie 3 qui soit fixée sur l'arceau 10 au lieu de la seconde partie 4.

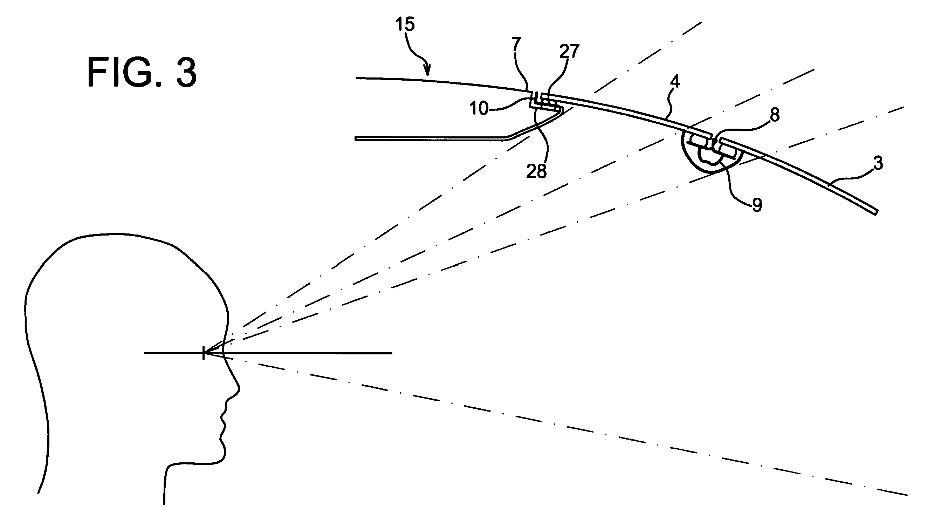

Les deux parties 3,4 du pare-brise 2 étant assemblées entre elles à l'aide du cadre 8, l'ensemble vient alors se fixer à une structure de caisse 15 du véhicule 1, comme cela est illustré sur la figure 3. La fixation est par exemple réalisée par un collage 27, par un vissage ou encore par une soudure entre le cadre 8 et le pavillon 7 du véhicule 1. Cette fixation est réalisée au niveau d'une feuillure 28 ou décrochement, du pavillon 7. La fixation entre le pare-brise 2 et le véhicule 1 peut également se faire à des montants de pare-brise 16,17 du véhicule 1, visibles sur la figure 1 _{:} le cadre est alors fixé de la même façon que sur le pavillon 7. La première partie 3 est ensuite collée directement sur des montants de pare-brise 16,17, et à la structure de caisse 15, au niveau du capot (non représenté) du véhicule 1, à l'opposé du pavillon 7.

Comme on peut le voir sur la figure 3, quel que soit le type d'élément transversal 9 utilisé, il est préférable de le faire le moins large possible afin de gêner le moins possible la visibilité du conducteur. Il ne représente au maximum que quelques degrés en verticale dans le champ de vision du conducteur dans les modes de réalisations des figures 1 à 2C.

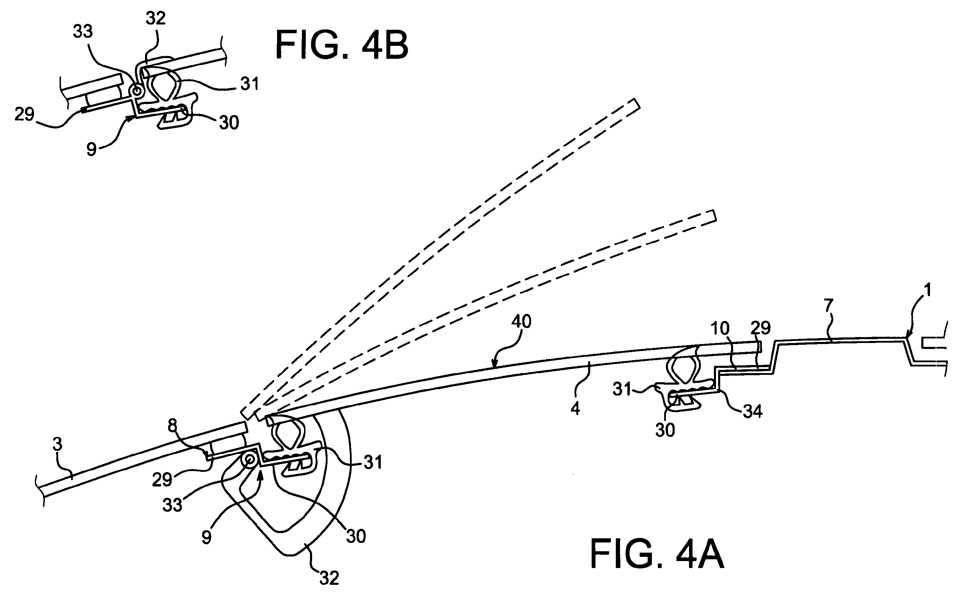

Un quatrième mode de réalisation particulier est représenté sur la figure 4A. La seconde partie 4 du pare-brise panoramique 2 a une fonction de déflecteur 40. C'est la partie enchâssée dans le cadre 8 du pare-brise 2 qui forme le déflecteur 40. Sur la figure 4A, il s'agit de la seconde partie 4 qui remonte sur le pavillon 7 du véhicule 1. On retrouve comme précédemment l'élément transversal 9 sur lequel sont fixés la première partie 3, ainsi que l'arceau 10. La première partie 3 est fixée à l'élément transversal 9 par de la colle ou un élément adhésif approprié. L'élément transversal 9 et l'arceau 10 prennent la forme de deux cornières 29,30 montées tête bêche et ayant un côté commun. Sur la cornière 29 de l'élément transversal 9, sur le bord extérieur du cadre 8, se trouvent au moins deux articulations 32, munies chacune d'un axe 33 et fixées à la fois sur la seconde partie 4 du pare-brise 2 et sur l'élément transversal 9. La fixation entre l'une des articulations 32 et la seconde partie 4 peut se trouver soit côté face concave comme sur la figure 4A, ou bien du côté face convexe comme sur la figure 4B, constituant ainsi un cinquième mode de réalisation particulier. Ce sont ces deux articulations 32 qui permettent à la seconde partie 4 de pivoter. Grâce à ces articulations 32, la seconde partie 4 peut prendre dans ce mode de réalisation un état « fermé », et un ou plusieurs états « ouvert », chaque état « ouvert » pouvant être défini par un angle d'ouverture de la seconde partie 4. Un joint d'étanchéité 31 bordant le cadre 8 est fixé sur la cornière 30 dudit cadre 8. Dans l'état « fermé », la seconde partie 4 vient prendre appui sur ce joint 31, permettant ainsi de « fermer » de manière étanche le cadre 8.

Dans ces cinq modes de réalisation particuliers, le matériau utilisé pour la réalisation du cadre 8 peut être un matériau métallique tel qu'un acier ou un alliage d'aluminium ou un matériau composite ou plastique.

Bien entendu, diverses modifications peuvent être apportées par l'homme du métier au véhicule automobile 1 et au pare-brise panoramique 2 qui viennent d'être décrits, uniquement à titre d'exemples non limitatifs.

## Revendications

1. Pare-brise panoramique (2), **caractérisé en ce qu'**il comporte au moins un côté incurvé destiné à empiéter sur un pavillon (7) d'un véhicule automobile (1), **en ce qu'**il comporte une vitre morcelée en au moins deux parties affleurantes (3,4) devant être assemblées l'une à l'autre de manière quasi jointive par l'intermédiaire d'un cadre (8) dans lequel est enchâssé l'une des deux parties (4), et **en ce que** le cadre (8) supporte au moins l'autre des deux parties (3).

2. Pare-brise panoramique (2) selon la revendication 1, **caractérisé en ce qu'**il comporte une première partie (3) munie de deux côtés incurvés (5,6) formant des retours latéraux et une seconde partie (4) destinée à empiéter sur le pavillon (7) du véhicule automobile (1).

3. Pare-brise panoramique (2) selon la revendication 2, **caractérisé en ce que** la première partie (3) est fabriquée en verre feuilleté et **en ce que** la seconde partie (4) est fabriquée en verre feuilleté, verre trempé ou en matériau synthétique tel que le polycarbonate.

4. Pare-brise panoramique (2) selon l'une des revendications 2 ou 3, **caractérisé en ce que** la seconde partie (4) est en forme d'une portion de calotte.

5. Pare-brise panoramique (2) selon l'une des revendications précédentes, **caractérisé en ce que** le cadre (8) comporte un élément transversal (9) et un arceau (10), et **en ce que** la partie non enchâssée (3) est fixée sur l'élément transversal (9).

6. Pare-brise panoramique (2) selon la revendication 5, **caractérisé en ce que** les deux parties (3,4) ont une face concave (38) et **en ce que** l'élément transversal (9) du cadre (8) comporte une zone principale (37) du côté de la face concave (38).

7. Pare-brise panoramique (2) selon la revendication 6, **caractérisé en ce qu'**il comporte un garnissage opaque (22) recouvrant la zone principale (37) de l'élément transversal (9).

8. Pare-brise panoramique (2) selon l'une des revendications 5 à 7, **caractérisé en ce que** l'arceau (10) comporte une feuillure (25) sur un bord intérieur (39).

9. Pare-brise panoramique (2) selon l'une des revendications 5 à 7, **caractérisé en ce que** l'arceau (10) comporte une rainure (26) sur un bord intérieur (39).

10. Pare-brise panoramique (2) selon l'une des revendications 5 à 9, **caractérisé en ce que** l'élément transversal (9) comporte sur un premier bord une feuillure (18) et sur un second bord opposé au premier bord une rainure (23).

11. Pare-brise panoramique (2) selon l'une des revendications 5 à 9, **caractérisé en ce que** l'élément transversal (9) comporte deux bords opposés, chacun possédant une feuillure (18,19).

12. Pare-brise panoramique (2) selon l'une des revendications 5 à 9, **caractérisé en ce que** l'élément transversal (9) comporte deux bords opposés, chacun possédant une rainure (23,24).

13. Pare-brise panoramique (2) selon l'une des revendications précédentes, **caractérisé en ce que** le cadre (8) est destiné à être fixé à des montants de pare-brise (16,17) et/ou au pavillon (7) du véhicule automobile (1).

14. Pare-brise panoramique (2) selon l'une des revendications précédentes, **caractérisé en ce que** la partie (4) enchâssée dans le cadre (8) forme un déflecteur (40) apte à prendre une position fermée et au moins une position ouverte.

15. Pare-brise panoramique (2) selon la revendication 14, **caractérisé en ce qu'**au moins deux articulations (32) sont solidaires de l'élément transversal (9) et de la partie (4) enchâssée dans le cadre (8) formant le déflecteur (40).

16. Pare-brise panoramique (2) selon l'une des revendications 14 ou 15, **caractérisé en ce qu'**il comporte des moyens d'étanchéité (31) bordant le cadre (8) sur lesquels la partie (4) enchâssée dans le cadre (8), formant le déflecteur (40), vient en appui en position fermée.

17. Pare-brise panoramique (2) selon l'une des revendications précédentes, **caractérisé en ce que** le cadre (8) est réalisé dans un matériau métallique tel qu'un acier ou un alliage d'aluminium ou dans un matériau plastique ou composite.

18. Pare-brise panoramique (2) selon l'une des revendications 5 à 17, **caractérisé en ce que** la fixation d'au moins une des parties (3,4) sur l'arceau (10) et/ou l'élément transversal (9) est réalisé par un cordon de colle (20) ou au moins un élément adhésif (20').

19. Pare-brise panoramique (2) selon l'une des revendications précédentes, **caractérisé en ce que** le cadre (8) est destiné à être fixé par vissage, collage ou soudure à une structure de caisse (15) de véhicule automobile (1).

20. Véhicule automobile (1) **caractérisé en ce qu'**il comporte un pare-brise panoramique (2) selon l'une des revendications précédentes.

## Claims

1. Panoramic windscreen (2) **characterized in that** it has at least one curved side designed to extend into a roof (7) of a motor vehicle (1), **in that** it has a window divided into at least two mutually flush parts (3, 4) that have to be assembled virtually edge to edge by means of a frame (8) in which one of the two parts (4) is set, and **in that** the frame (8) supports at least the other of the two parts (3).

2. Panoramic windscreen (2) according to Claim 1, **characterized in that** it has a first part (3) provided with two curved sides (5, 6) forming lateral returns and a second part (4) designed to extend into the roof (7) of the motor vehicle (1).

3. Panoramic windscreen (2) according to Claim 2, **characterized in that** the first part (3) is made of laminated glass, and **in that** the second part (4) is made of laminated glass, toughened glass, or a synthetic material such as polycarbonate.

4. Panoramic windscreen (2) according to either of Claims 2 and 3, **characterized in that** the second part (4) is in the form of a portion of a spherical cap.

5. Panoramic windscreen (2) according to one of the preceding claims, **characterized in that** the frame (8) has a transverse element (9) and an arch (10), and **in that** the non-set part (3) is fixed to the transverse element (9).

6. Panoramic windscreen (2) according to Claim 5, **characterized in that** both parts (3, 4) have a concave face (38) and **in that** the transverse element (9) of the frame (8) comprises a main region (37) on the same side as the concave face (38).

7. Panoramic windscreen (2) according to Claim 6, **characterized in that** it comprises an opaque trim (22) covering the main region (37) of the transverse element (9).

8. Panoramic windscreen (2) according to one of Claims 5 to 7, **characterized in that** the arch (10) comprises a rebate (25) on an inner edge (39).

9. Panoramic windscreen (2) according to one of Claims 5 to 7, **characterized in that** the arch (10) comprises a groove (26) on an inner edge (39).

10. Panoramic windscreen (2) according to one of Claims 5 to 9, **characterized in that** the transverse element (9) comprises a rebate (18) on a first edge, and a groove (23) on a second edge opposite the first edge.

11. Panoramic windscreen (2) according to one of Claims 5 to 9, **characterized in that** the transverse element (9) comprises two opposite edges, each possessing a rebate (18, 19).

12. Panoramic windscreen (2) according to one of Claims 5 to 9, **characterized in that** the transverse element (9) comprises two opposite edges, each possessing a groove (23, 24).

13. Panoramic windscreen (2) according to one of the preceding claims, **characterized in that** the frame (8) is designed to be fixed to windscreen pillars (16, 17) and/or to the roof (7) of the motor vehicle (1).

14. Panoramic windscreen (2) according to one of the preceding claims, **characterized in that** the part (4) which is set into the frame (8) forms a deflector (40) capable of adopting a closed position and at least one open position.

15. Panoramic windscreen (2) according to Claim 14, **characterized in that** at least two hinges (32) are fixed to the transverse element (9) and to the part (4) set in the frame (8) forming the deflector (40).

16. Panoramic windscreen (2) according to either of Claims 14 and 15, **characterized in that** it comprises sealing means (31) bordering the frame (8) with which the part (4) which is set in the frame (8), forming the deflector (40), comes into contact when closed.

17. Panoramic windscreen (2) according to one of the preceding claims, **characterized in that** the frame (8) is made of a metallic material such as a steel or an aluminium alloy or a plastic or composite material.

18. Panoramic windscreen (2) according to one of Claims 5 to 17, **characterized in that** the fixing of at least one of the parts (3, 4) to the arch (10) and/or to the transverse element (9) is done by means of a bead of adhesive (20) or at least one adhesive element (20').

19. Panoramic windscreen (2) according to one of the preceding claims, **characterized in that** the frame (8) is designed to be fixed by screw fastening, adhesive bonding or welding to a bodywork structure (15) of a motor vehicle (1).

20. Motor vehicle (1) **characterized in that** it comprises a panoramic windscreen (2) according to one of the preceding claims.

## Patentansprüche

1. Panoramawindschutzscheibe (2), **dadurch gekennzeichnet, dass** sie mindestens eine gekrümmte Seite aufweist, die dazu bestimmt ist, auf ein Autodach (7) eines Kraftfahrzeuges (1) überzugreifen, **dadurch**, dass sie eine Scheibe aufweist, die in mindestens zwei bündig abschließende Teile (3, 4) aufgeteilt ist, wobei der eine beinahe fugendicht mittels eines Rahmens (8), in dem einer der beiden Teile (4) eingebettet ist, auf dem anderen montiert werden soll, und **dadurch**, dass der Rahmen (8) mindestens den anderen der beiden Teile (3) stützt.

2. Panoramawindschutzscheibe (2) nach Anspruch 1, **dadurch gekennzeichnet, dass** sie einen ersten Teil (3), der mit zwei gekrümmten Seiten (5, 6) versehen ist, welche seitliche Rückläufe bilden, und einen zweiten Teil (4) der dazu bestimmt ist, auf ein Autodach (7) des Kraftfahrzeuges (1) überzugreifen, aufweist.

3. Panoramawindschutzscheibe (2) nach Anspruch 2, **dadurch gekennzeichnet, dass** der erste Teil (3) aus Verbundglas hergestellt ist und dass der zweite Teil (4) aus Verbundglas, Sekuritglas oder aus Kunststoffmaterial wie etwa Polycarbonat hergestellt ist.

4. Panoramawindschutzscheibe (2) nach einem der Ansprüche 2 oder 3, **dadurch gekennzeichnet, dass** der zweite Teil (4) die Form eines Haubenabschnitts aufweist.

5. Panoramawindschutzscheibe (2) nach einem der vorhergehenden Ansprüche, **dadurch gekennzeichnet, dass** der Rahmen (8) ein Querelement (9) und einen Bügel (10) aufweist und dass der nicht eingebettete Teil (3) auf dem Querelement (9) befestigt ist.

6. Panoramawindschutzscheibe (2) nach Anspruch 5, **dadurch gekennzeichnet, dass** die beiden Teile (3, 4) eine konkave Vorderseite (38) aufweisen und dass das Querelement (37) des Rahmens (8) eine Hauptzone (37) auf der Seite der konkaven Vorderseite (38) aufweist.

7. Panoramawindschutzscheibe (2) nach Anspruch 6, **dadurch gekennzeichnet, dass** sie eine lichtdichte Bestückung (22) aufweist, welche die Hauptzone (37) des Querelements (9) abdeckt.

8. Panoramawindschutzscheibe (2) nach einem der Ansprüche 5 bis 7, **dadurch gekennzeichnet, dass** der Bügel (10) auf einem Innenrand (39) einen Falz (25) aufweist.

9. Panoramawindschutzscheibe (2) nach einem der Ansprüche 5 bis 7, **dadurch gekennzeichnet, dass** der Bügel (10) auf einem Innenrand (39) eine Nut (26) aufweist.

10. Panoramawindschutzscheibe (2) nach einem der Ansprüche 5 bis 9, **dadurch gekennzeichnet, dass** das Querelement (9) auf einem ersten Rand einen Falz (18) und auf einem zweiten Rand, welcher dem ersten Rand gegenüberliegt, eine Nut (23) aufweist.

11. Panoramawindschutzscheibe (2) nach einem der Ansprüche 5 bis 9, **dadurch gekennzeichnet, dass** das Querelement (9) zwei einander gegenüberliegende Ränder aufweist, wobei jeder jeweils einen Falz (18, 19) besitzt.

12. Panoramawindschutzscheibe (2) nach einem der Ansprüche 5 bis 9, **dadurch gekennzeichnet, dass** das Querelement (9) zwei einander gegenüberliegende Ränder aufweist, wobei jeder jeweils eine Nut (23, 24) besitzt.

13. Panoramawindschutzscheibe (2) nach einem der vorhergehenden Ansprüche, **dadurch gekennzeichnet, dass** der Rahmen (8) dazu bestimmt ist, an Windschutzscheibenständern (16, 17) und/oder am Autodach (7) des Kraftfahrzeugs (1) befestigt zu werden.

14. Panoramawindschutzscheibe (2) nach einem der vorhergehenden Ansprüche, **dadurch gekennzeichnet, dass** der im Rahmen (8) eingebettete Teil (4) einen Deflektor (40) bildet, der dazu fähig ist, eine geschlossene Position und mindestens eine offene Position einzunehmen.

15. Panoramawindschutzscheibe (2) nach Anspruch 14, **dadurch gekennzeichnet, dass** mindestens zwei Gelenke (32) mit dem Querelement (9) und dem Teil (4), der im den Deflektor (40) bildenden Rahmen (8) eingebettet ist, gelenkig verbunden sind.

16. Panoramawindschutzscheibe (2) nach einem der Ansprüche 14 oder 15, **dadurch gekennzeichnet, dass** sie Dichtungsmittel (31) aufweist, die den Rahmen (8) umranden, wobei sich der Teil (4), der im den Deflektor (40) bildenden Rahmen (8) eingebettet ist, in geschlossener Position auf diesen abstützt.

17. Panoramawindschutzscheibe (2) nach einem der vorhergehenden Ansprüche, **dadurch gekennzeichnet, dass** der Rahmen (8) aus einem metallenen Material wie etwa Stahl oder einer Aluminiumlegierung oder aus einem Kunststoffmaterial oder Verbundstoff gefertigt ist.

18. Panoramawindschutzscheibe (2) nach einem der Ansprüche 5 bis 17, **dadurch gekennzeichnet, dass** die Befestigung von mindestens einem der Teile (3, 4) am Bügel (10) und/oder am Querelement (9) mittels einer Klebstoffschnur (20) oder mindestens eines Klebeelements (20') erfolgt.

19. Panoramawindschutzscheibe (2) nach einem der vorhergehenden Ansprüche, **dadurch gekennzeichnet, dass** der Rahmen (8) dazu bestimmt ist, mittels Verschraubung, Anklebung oder Schweißung an einer Fahrzeugaufbaustruktur (15) des Kraftfahrzeugs (1) befestigt zu werden.

20. Kraftfahrzeug (1), **dadurch gekennzeichnet, dass** es eine Panoramawindschutzscheibe (2) nach einem der vorhergehenden Ansprüche aufweist.
